# EUROPEAN PATENT APPLICATION

(11) **EP 1 162 561 A1**
(43) Date of publication of application: **12.12.2001**
(21) Application number: 01113834.4
(22) Date of filing: 06.06.2001
(51) Int. Cl.: G06F 17/60

(54) **Method and system for renting a construction machine**

(30) Priority: 07.06.2000 JP 2000171087
(71) Applicant: KOBELCO CONSTRUCTION MACHINERY CO., LTD., Hiroshima-shi, Hiroshima 731-0138 (JP)
(72) Inventor: Nishiyama, Takehiro, Kobelco Constr. Mach. Co.,LTD, Tokyo, 103-8246 (JP)
(74) Representative: Leson, Thomas Johannes Alois, Dipl.-Ing.

(57) **Abstract**

In this inventive method and system for renting a construction machine, a network server is allowed to hold information related to specification, a rental situation and a location of a construction machine for rent, and information related to specification of construction machine desiring reception of a rental service, information related to a rental period desiring reception of the rental service, and information related to the location desiring reception of the rental service are input when a person who desires to receive the rental service gets access to a network, whereby the network server searches with information related to the specification, the rental period and the location input by the person as search items, for information related to rentable construction machines to provide a searched result to the person. Thereby, the total holding number of construction machines held by a rental company can be reduced to cope with the general users' desire of a rental service, and further enhance the operating rate of construction machines held by the firm.

## Description

### BACKGROUND OF THE INVENTION

### (FIELD OF THE INVENTION)

The present invention relates to a method and a system for renting a construction machine for renting the construction machine through a network.

### (DESCRIPTION OF THE RELATED ART)

Generally, construction machines represented by a hydraulic excavator, a bulldozer and the like are not only sold directly to general users such as a construction company but also sold to a rental company for renting to the general users. There now appears a conspicuous trend that the general users switch from purchase by own to rental. From the point of view of such a trend as described, rental companies hold, in order to respond to demands of the general users or clients for rent, construction machines of various specifications to cope with several orders of the general users.

At present, no accommodation between a plurality of rental companies with rentable construction machines is conducted. Further, at present, construction companies, general users, do not rent the other companies with a construction machine owned by themselves when the construction machine is not used.

Further, the construction machine is applied with many specifications according to the object of use thereof as compared with private cars. Therefore, it is sometimes difficult to replace one machine with the other provided with specifications different therefrom. For example, in a word, construction machines have various kinds of road machines such as a hydraulic excavator, a wheel loader, a construction crane, a bulldozer, and a road roller, and if kinds of the machines are different, such machines cannot be replaced at all. Further, machines called a hydraulic excavator in a word have a specification in connection with the size such as a bucket capacity and a body weight, a specification in connection with the form such as a complete small rotating type and a backward small rotating type, a specification in connection with the option such as a rubber crawler and an iron crawler, and a specification in connection with the attachment for mounting such as a standard bucket, a breaker, and a nibbler, variation of which is very various.

Further, renting construction machines employs no way as in the case of rent-a-car service such that a person who desires rental service (hereinafter, sometimes referred to as a renter) goes to a rental company to get the machine directly and return it to the rental company upon completion of use thereof. That is, in normal cases, the rental companies themselves carry a construction machine for rent on a truck or the like to take it to the work site desired by the renter, and carry, when the rental service is finished, the construction machine for rent on the truck or the like from the work site to the parking place of the rental company to recover it.

However, according to the above-described conventional rental method, in cases where client's desires for rental are concentrated on the specific machine, rental service is sometimes impossible to provide because no specific construction machines for rent held by the rental company are left. This tends to occur particularly in a small-scaled rental company.

Particularly in the construction machines, there are various specifications as described above so that replacement with machines of other specifications is difficult. Therefore, it has not been easy to rent timely a construction machine as desired. Accordingly, for precisely coping with the general users' desires of rental services, it has been unavoidable to hold more numbers of machines than that is needed originally, or to hold even a machine with a specification which is low in the rate of operation in order to meet a variety of preparations for many kinds of machines for rent.

Further, in the construction machines, it is necessary to carry the construction machines for rent between the work site and the parking place, posing a problem that the carrying cost is high. There is a further problem that the operating time is reduced by days required for the carriage.

### SUMMARY OF THE INVENTION

It is an object of the present invention to provide a method and a system for renting a construction machine, which owns jointly information related to construction machines for rent making use of a network whereby the total holding number of construction machines held by a rental company can be reduced, which can cope precisely with general users' desires for rental services, and further can enhance the rate of operation of the construction machines held by the rental company.

The present invention taxes ingenuity as described below in a method for renting a construction machine from a person who desired to rent a construction machine to a person seeking a rental service of a construction machine through a network.

That is, in the present invention, first, a network server is caused to hold information related to a specification of a construction machine for object of rental, information related to a rental situation of a construction machine for object of rental, and information related to a location of a construction machine for object of rental. In that situation, a person seeking a rental service of a construction machine inputs at least, when getting access to the network, information related to the specification of a construction machine for the person to desire to get the rental service of, information related to a rented period for person to desire to get the rental service during, and information related to a location for the person to desire to get the rental service at. Thereby, the network server searches, with information related to the specification, the rental period and the location input by the person as search items, for information related to a rentable construction machine on the basis of the information related to the specification, the rental situation and the location held by the network server to provide a searched result to the person.

In this case, since the network server searches for information related to the rentable construction machine on the basis of the information related to the specification, the rental period and the location input by the person who desires to receive the rental service, and provides the searched result to the person, therefore it is possible to quickly hold information jointly between the person who desires to receive the rental service and the person who desires to rent. Thereby, accommodation of construction machines between rental service companies intending to provide a rental service of a construction machine comes to enable reduction in a total holding numbers of construction machines held by the companies, to enable precise coping with the rental desire of general users, and further to enable enhancement of the rate of operation of construction machines held by the rental service companies.

### BRIEF DESCRIPTION OF THE DRAWINGS

FIG. 1 is a block diagram showing one example of a network system to which the present invention is applied;
FIG. 2 is a flowchart showing one example of the processing procedure of a rental method according to the present invention;
FIG. 3 is a view showing a screen for searching for construction machines out of screen constitutions of a network terminal used in the present invention;
FIG. 4 is a view showing a screen which shows, as a list, results obtained by searching for construction machines out of screen constitutions of a network terminal used in the present invention;
FIG. 5 is a view showing a screen which shows, as a calendar, results obtained by searching for construction machines out of screen constitutions of a network terminal used in the present invention;
FIG. 6 is a view showing a screen showing the details of results obtained by searching for construction machines out of screen constitutions of a network terminal used in the present invention; and
FIG. 7 is a view showing a screen for applying for a rental service for construction machines out of screen constitutions of a network terminal used in the present invention.

### DESCRIPTION OF THE PREFERRED EMBODIMENTS

Some of the preferred embodiments of the present invention will be described hereinafter with reference to the drawings. These embodiments are one form of embodiment, and are not limited thereto.

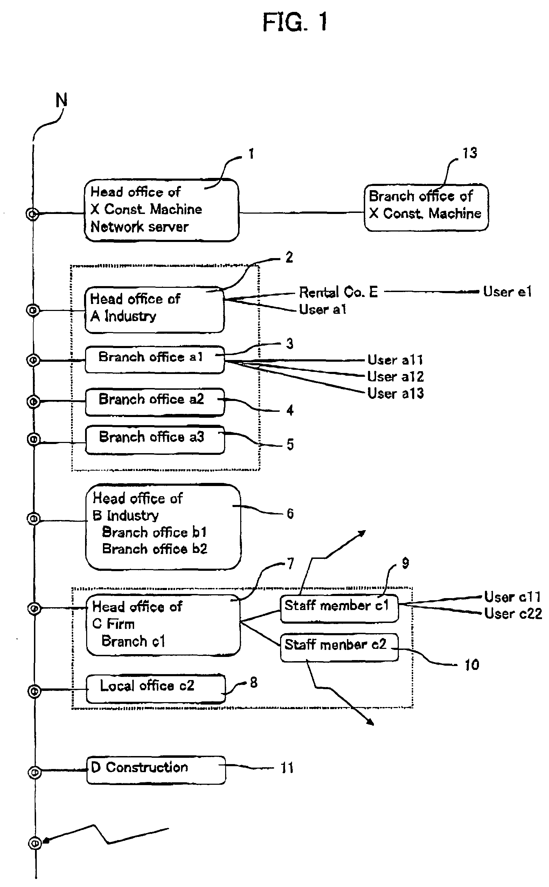

FIG. 1 is a block diagram showing one example of a network system to which the present invention is applied.

In FIG. 1, numeral 1 designates a network server. This network is operated by X Construction Machine company which is an owner of the network server 1. FIG. 1 shows an example in which the network server 1 is installed in the head office of the X Construction Machine. However, the network server is not necessarily installed particularly in the head office of the X company, but there can entrust a person other than the X Construction Machine with its operation. Needless to say, the X Construction Machine, an A Industry, Ltd. and the like are tentative names to the end, and whatever designation can be used.

The network server 1 is connected to a plurality of network terminals 2 to 11 through a network circuit N. Each of the network terminals 2 to 11 can get access to the network server. In this embodiment, the network N uses an Internet. The network server 1 can get access to the network N via the home page of the X Construction Machine.

The network terminals 2 to 5 are held by A Industry which is a rental company. Each of the terminals 2 to 5 is respectively a normal personal computer. In this embodiment, the A Industry holds the network terminals 2 to 5 in both the head office and respective branch offices a1, a2, and a3. The head office of the A Industry handles a rental service for construction machines with other rental company E having a general user e1, in addition to a general user a1 such as construction company.

Further, the branch office a1 of the A Industry handles a rental service for construction machines with general users a11 to a13 such as construction companies. Although omitted in FIG. 1, the branch offices a2 and a3 also have general users of their own clients similar to the branch office a1. In this embodiment, communication between the head office or the branch office and the general users is done by a telephone or a facsimile transmission device.

The network terminal 6 is held by B Industry, Ltd. which is a rental company. The network terminal 6 is a normal personal computer. The B Industry holds the network terminal 6 only in the head office. Communication between the branch office and the staff members is done by a telephone or a facsimile transmission device. The B Industry also has general users who are their own clients similar to the A Industry, though omitted in FIG. 1.

The network terminals 7 and 8 are held by C firm which is a rental firm. The terminals 7 and 8 are normal personal computers. The C firm holds the network terminal 7 in the head office, and the branch office c2 holds the other network terminal 8. The small-sized branch c1 is not provided with a network terminal. Further, the C firm allows the staff members c1 and c2 to carry portable type network terminals 9 and 10. The staff member c1 uses the network terminal 9 to enable access to the network N.

The network terminal 11 is held by D Construction Co. which is a general user who carries on the construction business. The network terminal 11 is a normal personal computer. The D Construction registers, while receiving a rental service for construction machines by itself, surplus construction machines in the network server 1 so as to rent them to other general users, thus carrying on the rental business. Thereby, the rate of operation of its own construction machines can be enhanced. In this embodiment, an example in which the D Construction also carries on the rental business is shown, but can be joined in the rental system of the present invention as a general user who merely receives a rental service.

Numeral 13 designates a network terminal installed in the branch office of the X Construction Machine, which is connected to the network server 1. Information of rentable used cars or construction machines is input by the terminal 13.

Next, operation of the network system shown in FIG. 1 will be explained giving an example of the branch office a1 of the A Industry.

First, out of specifications of the construction machine for object of a rental service such as a type of machine, a machine number, date of manufacture, date of start of use, bucket capacity, operating mass and the like about construction machines for rent held by the branch office a1, information related to the specification which is fixed and cannot be changed is input into the network terminal 3 to allow the network server 1 to hold the information. Alternatively, if the type of machine is input in order to simplify the initial input, the typical specification is displayed on the screen, and only the specification that need be changed may be changed.

Subsequently, likewise, with respect to the construction machines for rent held by the branch office a1, information related to the changeable specification such as equipment and attachment is input using the network terminal 3 and held by the network serer 1. In this embodiment, the changeable specification such as an underbody (a rubber shoe or a rubber crawler or a normal iron crawler), an arm (a short arm or a long arm), and an attachment (being provided with a slope finishing bucket, a nibbler, a breaker or the like, or being provided with a standard bucket) are input. This information related to such changeable specifications as described above is updated and input when the change is made.

The slope finishing bucket is relatively easily replaced by the normal bucket. However, replacement of the normal bucket with the nibbler is considerably difficult because a hydraulic pipeline or the like has to be additionally installed. Further, changing between the short arm and the long arm is more difficult than changing between the rubber crawler and the iron crawler. In this embodiment, the network server 1 comprises a hierarchical structure which holds data with a specification that is difficult to change as an upper class and with a specification this is easily changed as a lower class. A manner for separating the upper class from the lower class, and the number of classes may be suitably decided according to the specification, and this embodiment merely shows one of examples of the present invention.

As the specifications of construction machines held by the network server 1, other optional equipment may be added. For example, specifications such as a shoe width, a crane equipment, and a telescopic arm equipment may be added.

In the case of the present embodiment, information related to the specification of construction machines is input by the network terminal 3 of the branch office a1. That may be input en bloc by the network terminal 2 of the A Industry head office. Further, the X Construction Machine who is a holder of the network server 1 may act for the branch office a1 to input it en bloc.

Then, by the network terminal 3 the branch office a1 inputs information related to the rental situation of its own construction machines for rent (such as, in course of rental, in course of vacant, in course of negotiations, and in course of out-of-operation), and information related to the location of construction machines for rent. The information is updated and input whenever the rental service is made. These inputs may be done by a person who has received a rental service and joined in the present network (in the case of the present embodiment, for example, the D Construction Co.). Further, the head office of the A Industry may input en bloc.

While in this embodiment, information related to the rental situation is on a unit of day, a time unit or a week unit may be employed.

Further, in the case of the present embodiment, information related to the location of construction machines for rent is held as hierarchical structure. In the uppermost class, information of a district or region is held, and in the lower class, information of a prefecture or cities, towns and villages is held. Naturally, the class is not limited to the range of a district public organization but may be the district or range covered and charged by the respective branch offices.

Further, as the information related to the location of construction machines for rent, the present location is preferably input. However, in cases where the work site is frequently moved, inputting for the location is complicated. Therefore, this can be also replaced by the location of a branch office holding the construction machine Further, in cases where a transmitter capable of transmitting information related to the present position is mounted on the construction machine, information from the transmitter may be incorporated into the network server making use of a communication satellite to hold it as information related to the location of the construction machine to be rented.

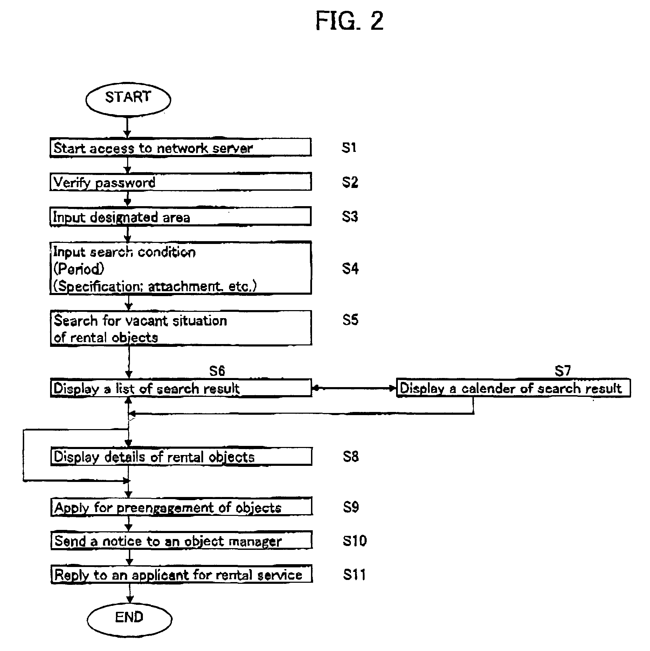

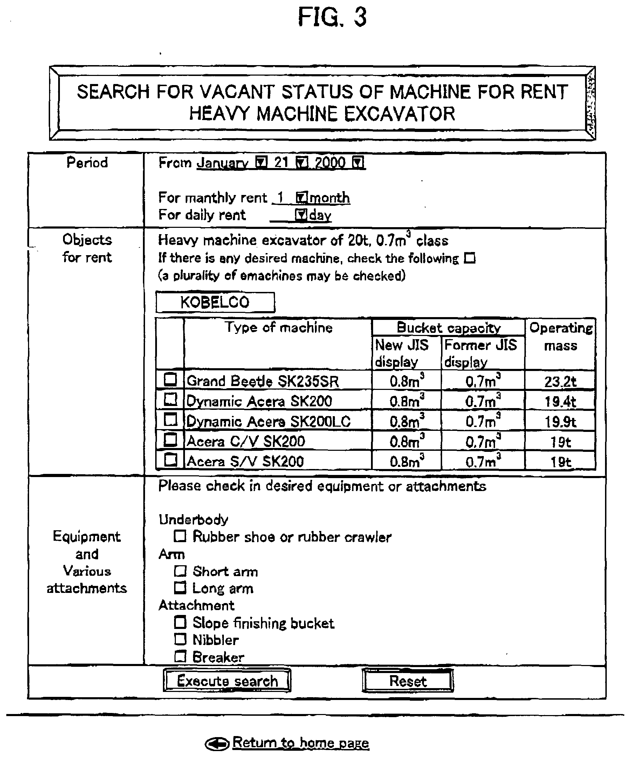

Next, operation in a case where an order is received from a person who desires to get a rental service (in the case of this embodiment, for example, a user all) will be explained with reference to FIGS. 2 to 7. FIG. 2 is a flowchart showing one example of the processing procedure of a rental method of this invention. FIGS. 3 to 7are views showing the screen constitution of a network terminal.

In a case where communication is received from a renter through a telephone or the like, a staff member in the branch office a1 starts the network terminal 3 of the branch office a1 to start application of a rental service. First, as shown in FIG. 2, he gets access to the network server (Step S1) for verification of a password (Step S2). Then, a district designation (location) for which the rental service is desired is input (Step S3). In this embodiment, "Kinki district" and "Hyogo prefecture" are input.

This embodiment is of an example in which a heavy machine excavator is used as a construction machine to be rented. Naturally, the other type of machines, for example, a compact excavator or the like can be included together in this system.

By this input, the screen shown in FIG. 3 is displayed on the network terminal 3. By the screen shown in FIG. 3, information related to a rental period and a type of machine or an equipment and an attachment which a person seeks a rental service for are input (Step S4). After completion of these inputs, an "execute search" button on the lower stage of the screen is clicked. With this, the network server 1 starts searching (Step S5). At this time, the network server 1 searches for information related to specification, a rental situation, and a location of the construction machine for rent held in the server, using information related to the specification, a rental period, and the location of his choice as search items.

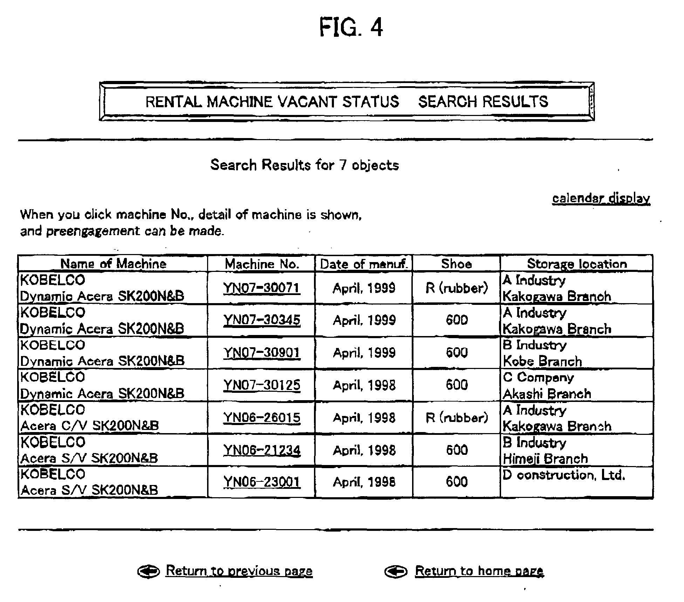

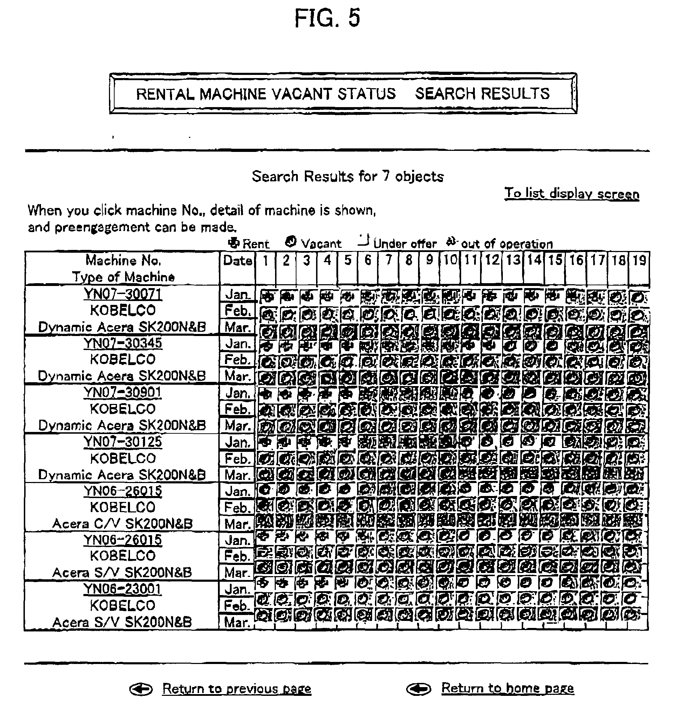

The search result is displayed on the screen of the network terminal 3. The screen displaying in the form of a list is shown in FIG. 4 (Step S6) and the screen displaying in the form of a calendar is shown in FIG. 5 (Step S7). In the list display shown in FIG. 4, the recent storage location as information related to the location is displayed in addition to the type of machine, the number of machine, the date of manufacture, and the type of crawler (crawler shoe). In the calendar display shown in FIG. 5, operating situations of various types of machines for three months before and after a rental period a person seeking a rental service for are displayed. The operating situations are displayed separately in a form of any one of in course of rental, in course of vacant, in course of negotiations, and in course of out-of-operation (in course of maintenance). Between the list display and the calendar display, the screens thereof can be switched each other.

In the case of providing the list including information related to the location of construction machines to be rented as described above, the construction machines to be rented can be viewed as a list. Accordingly, objects or construction machines which meet the desire of a person seeking a rental service of a construction machine can be more easily searched. Further, since the information related to the location of construction machines is included, a construction machine for rent located closer to the place a person seeking a rental service at can be selected.

Further, in the case where information related to the rental situation of construction machines to be rented is provided as a calendar, the operating situation of construction machines to be rented can be grasped before and after a rental period a person seeking a rental service for. Therefore, in a case where there is some time for work periods to spare, the rental period can be finely adjusted. Further, since the rental situation before and after can be grasped, an unexpected extension of a period or the like can be easily predicted and coped with.

In searching described above, the complete coincident search can be also carried out, but it is desired search items are divided into preferential search items and equivocal search items. In the case of this embodiment, information related to the location belongs to preferential search items and the information related to the rental period and the specification a person seeking a rental service for belongs to equivocal search items. Therefore, only objects in Hyogo prefecture are displayed in the list. However, the period is displayed with vagueness for a few days before and after, and the specification is displayed as similar objects, i.e. similar specification. That is, as shown in FIG. 4, types of Dynamic Acera and types of similar specification of Acera S/V are displayed. With respect to the crawlers, both rubber specifications and iron specifications are displayed.

As described above, in the case where information related to the location a person seeking a rental service at is searched as a preferable search item, the following effects can be obtained. Since information of construction machines cleared from restriction related to the location a person seeking a rental service at is provided, carrying of construction machines to be rented to the rental place can be made at a minimum. This is particularly effective in cases where construction machines to be rented are so large that the machine cannot be easily carried, or are of a fixed type or a tracklaying type so that the machine cannot self-run on the public road. Further, since the machine is not once returned to a parking place but can be moved from one work site to next work site, carrying cost can be further reduced. Further, the operating rate of construction machines for rent can be also enhanced.

In a case where information related to specification or a rental period a person seeking a rental service for is searched as an equivocal search item, after which information related to the location a person seeking a rental service at is searched as a preferential search item, the following effects can be obtained. Even in a case where restrictions other than the restriction related to the location are not fulfilled, information related to the specification or the rental period is searched as an equivocal search item. Therefore, a person seeking a rental service for is able to obtain information of construction machines which are somewhat different in specification and rental period desired. Thereby, a machine having specification that can be replaced is selected or the using a rental period is finely adjusted whereby the person is able to rent the construction machine that can be satisfied.

Further, in cases where information related to the location a person seeking a rental service for is of a hierarchical structure comprising an upper class showing a wider area and a lower class showing a narrower area, and the network server searches for information related to a rentable construction machine with information related to the location of the upper class as an essential search item and information related to the location of the lower class as an equivocal search item, the following effects can be obtained. That is, since the restrictions related to the location a person seeking a rental service at comprise a plurality of classes as hierarchical structure, even in a case where the construction machine to be rented is not present in the just location a person seeking a rental service at, a renter is able to obtain information of the construction machine in an adjacent location of the location. Therefore, carrying cost somewhat increases, but the person seeking a rental service for is able to rent the construction machine that can be satisfied with. It is noted that the class of information related to the location is made to have a proper classes divided regarding the location whereby there can be finely coped with the location a person seeking a rental service at, and cost related to carrying can be further reduced.

Naturally, information related to specification a person seeking a rental service for or information related to a rental period a person seeking a rental service at may be used in place of information related to the location, as a preferential search item. In a case where information related to specification is used as a preferential search item, such a use as described is effective in a case where the specification is necessary by all means. Further, in a case where a rental period is used as a preferential search item, this is effective in a case where the period is an absolute item.

In the case where information related to specification of construction machines a person seeking a rental service for is searched as a preferential search item, the construction machine having specification suited for the desire of a renter can be rented. This is particularly effective in a case where work in a narrow place is required and only the completely small rotating type applicable to construction machine of an upper rotating body can be applied, or in a case where special specification such as a nibbler (cannibalizing specification) or a breaker (rocking specification).

Further, information related to specification of the construction machine a person seeking a rental service for may be of the hierarchical structure with specification that cannot be easily changed as an upper class and with specification that can be easily changed as a lower class, and the network server may search for information related to a rentable construction machine with the information related to specification of an upper class as an essential search item and with the information related to specification of a lower class as an equivocal search item.

In this case, even in a case where restriction related to the specification is not completely satisfied with, information related to a lower class is subjected to equivocal search, and therefore, a renter is possible to obtain information of a construction machine which is somewhat different in specification desired. Thereby, in a case where a type of machine desired is not vacant as a rental object but a rental service is eager to be received by all means, easily changeable specification is changed to enable the renter to rent a satisfactory construction machine. For example, this can be done by replacing an iron crawler with a rubber crawler or by changing an attachment from a bucket to a nibbler.

Further, in a case where information related to a rental period a renter seeking a rental service for is searched as a preferential search item, a construction machine can be rented on the date suited for the renter's desire. This is effective the time necessary for the completion is getting near so that freedom relative to a due date for the completion is limited.

Of course, it may be possible to allow a user of the network terminal to select what a preferential search item is. In this case, it becomes possible to make search suited for the desire of a user, thus enhancing convenience for a user. Not only selection is made out of these three items, but selection is made out of four or more. It may be possible to select two items out of those items.

One example is described below. In searching for information related to a rentable construction machine by the network server, a person who desires to receive rental selects, as an item for a preferential search item, one out of items including at least two out of specification, a rental period or a location a person seeking a rental service for.

In this case, a renter is able to select one out of the specification, the period or the location as a preferential search item. Accordingly, it is possible to cope with any of the case where the place is important, the case where the specification is important and the case where the rental period is important, thus enhancing renter's convenience.

Furthermore, as a search item, information other than information related to the location, the specification and the period may be used. For example, a person who supplies a construction machine to be rented, makers of construction machines, date of manufacture and the like may be used. These search items may be used for a secondary search for further squeezing objects after conduction of a primary search.

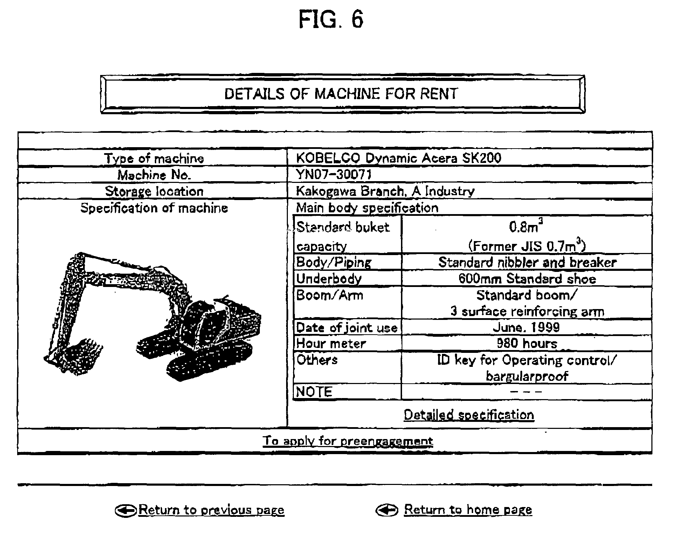

In a case where an object to desire or review a rental service was found from the list display or the calendar display, a part of a type of machine is clicked. Thereby, a machine for rent shown in FIG. 6 is displayed in detail (Step S8). On the screen, detailed specifications of the main body of the machine, in addition to type of machine, machine number and storage location, are shown together with photograph of machine. This screen can be skipped when no display is necessary. More detailed information may be provided for a person who desires further details. For example, they can be linked to catalog information or the like.

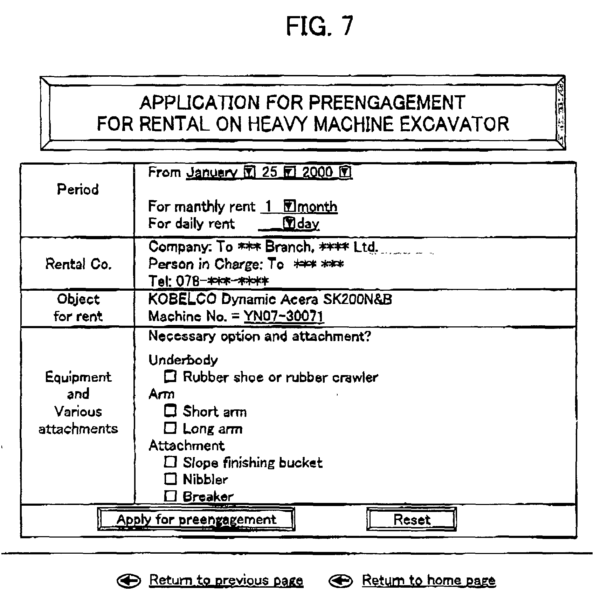

In a case where a renter reserves a rental service, an "apply for reengagement" button in the lower stage of FIG. 6 is clicked. Thereby, a screen of application for preengagement, FIG. 7, is displayed. After predetermined necessary matters are input in a screen of application for preengagement, and an "apply for reengagement" button in the lower stage of the screen is clicked, the application information is transmitted to the network server 1, and an application for preengagement is done (Step S9). The application for reengagement in Step S9 may be done through an interview or a telephone.

Upon receipt of the application for preengagement, the network server 1 provides a person in charge of the construction machine with information regarding reception of the application through an e-mail (Step S10). This communication may be done by a person in charge of the X Construction Machine to a person in charge of the A Industry though a telephone or a facsimile transmission device. A receipt/confirmation paper may be sent by mail or by facsimile.

The person in charge of the A Industry who received the communication provides a general user all who was applied for a rental service with a reply of Yes or No through a telephone or the like (Step S11). Naturally, the person in charge of the A Industry may reply the general user a11 through an e-mail.

In this embodiment, the holder of the network server, the X Construction Machine, is not participated directly in the rental transaction. However, the X Construction Machine may be participated in the network as clients with respect to the server of the same line as the A Industry.

Further, in a case where the network server 1 can not search for information related to a rentable construction machine, that is, in a case where the information can not be provided, the X Construction Machine may supply information related to a retable construction machine owned by the X Construction Machine. In this case, if the X Construction Machine is manufacturing makers for construction machines, information of a used machine received when a new machine is sold can be provided, or information of new machines in stock can be provided. In this case, since the X Construction Machine does not appear directly on the rental business, this is desirable for rental companies such as the A Industry as compared with the case of direct participation in the rental business.

That is, as described above, in the case where information related to the rentable construction machine owned by the network server holder is provided to the renter, the holder of the network server can be also participated in the accommodation of construction machines on rental. Accordingly, more precise coping with the desire of the renter can be made. Further, in the case where the holder of the network server is manufacturing makers of construction machines, used machines or new machines can be put into the rental markets timely.

While in the aforementioned embodiments, a heavy machine excavator is used as an example of a construction machine to be rented, it is noted that other construction machines may well be employed. Needless to say, a similar rental method may be also applied, for example, to a wheel loader, a construction crane, a mini-excavator, a road machine and the like.

In a case where a construction machine to be rented is a tracked type construction machine, since the tracked type construction machine cannot self-run on the public road, a problem of carrying is particularly important. Accordingly, cost related to the carrying can be reduced.

Further, while in the aforementioned embodiment, use is made of an Internet as a network, it is noted that even a network using a satellite communication system or an exclusive-use circuit can be likewise employed.

The present invention taxes the following ingenuity in a system for renting a construction machine from a person who desires to rent construction machines to a person who desires to receive a rental service for construction machines.

There is provided a network server for holding at least information related to specification of construction machines to be rented, information related to rental situations of construction machines to be rented, and information related to the location of construction machines to be rented. Further, there is also provided a network terminal for causing a person seeking a rental service of a construction machine capable of inputting basic information of specification of a construction machine desiring reception of the rental service, information related to a rental period desiring reception of the rental service, and information related to the location desiring reception of the rental service, when the person gets access to the network. The network server searches, with information related to the specification, the period and the location input by the person as search items, for information related to rentable construction machines on the basis of the basic information related to the specification, the rental situation and the location held by the network server to provide a searched result to a network terminal of the person.

According to the present system, the aforementioned rental method of construction machines can be realized by the network server and the network terminal. Since the network terminal is now popularizing, the system constitution which is simple as a whole and inexpensive can be provided. Further, since the present system is highly versatile one, it can be also applied to realize the other systems.

Further, when a manager of the network terminal or the staff members of rental firms gets access to the network in place of a person who desires to receive a rental service, inputting at least information related to specification of construction machines desiring reception of a rental service, information related to a rental period desiring reception of the rental service, and information related to the location desiring reception of the rental service from the network terminal, is also included in the technical scope of the present invention.

In the foregoing, one embodiment of the present invention has been disclosed, but the scope of protection of the present invention is not limited thereto.

In this inventive method and system for renting a construction machine, a network server is allowed to hold information related to specification, a rental situation and a location of a construction machine for rent, and information related to specification of construction machine desiring reception of a rental service, information related to a rental period desiring reception of the rental service, and information related to the location desiring reception of the rental service are input when a person who desires to receive the rental service gets access to a network, whereby the network server searches with information related to the specification, the rental period and the location input by the person as search items, for information related to rentable construction machines to provide a searched result to the person. Thereby, the total holding number of construction machines held by a rental company can be reduced to cope with the general users' desire of a rental service, and further enhance the operating rate of construction machines held by the firm.
FIG. 1
   - 1: Head office of X Const. Machine Network server
   - 2: Head office of A Industry, Rental Co. E User a1 User e1
   - 3: Branch office a1 User a11 User a12 User a13
   - 4: Branch office a2
   - 5: Branch office a3
   - 6: Head office of B Industry, Branch office b1 Branch office b2
   - 7: Head office of C firm Branch c1
   - 8: Local office c2
   - 9: Staff member c1 User c11 User c22
   - 10: Staff member c2
   - 11: D Construction
   - 13: X Const. Machine, Branch office
FIG. 2
   - S1: Start access to network server
   - S2: Verify password
   - S3: Input designated area
   - S4: Input search conditions (Period) (Specification: attachment, etc.)
   - S5: Search vacant situation of rental objects
   - S6: Display a list of search result
   - S7: Display a calendar of search result
   - S8: Display details of rental objects
   - S9: Apply for preengagement of objects
   - S10: Send a notice to an object manager
   - S11: Reply to an applicant for rental service
FIG. 3

### SEARCH FOR VACANT STATUS OF MACHINE FOR RENT HEAVY MACHINE EXCAVATOR

Period From Jan. 21, 2000
For monthly rent 1 month For daily rent days
Object for rent Heavy machine excavator of 20t, 07m³ class

If there is any desired machine, check the following
(a plurality of machine may be checked)
Type of machine Bucket capacity New JIS display Former JIS display
Operating Mass Grand Beetle Dynamic Acera
Equipment and various attachments
Please check in desired equipment or attachment
Underbody Rubber shoe or rubber crawler
Arm Short arm Long arm
Attachment Slope finishing bucket Nibbler Breaker
Execute search Reset
Return to home page
FIG. 4

### RENTAL MACHINE VACANT STATUS SEARCH RESULTS

Search Results for 7 objects calendar display
When you click machine No., detail of machine is shown, and preengagement can be made.
Name of Machine Machine No. Date of manuf. Shoe Storage Location Return to previous page Return to home page
FIG. 5

### RENTAL MACHINE VACANT STATUS SEARCH RESULTS

Search Results for 7 objects To list display screen
When you click machine No., detail of machine is shown, and preengagement can be made.
Rent Vacant under offer out of operation
Machine No. Type of machine Date Jan. Feb. Mar.
Return to previous page Return to home page
FIG. 6

### DETAILS OF MACHINE FOR RENT

Type of machine
Machine No.
Storage location A Industry, Kakogawa Branch
Specification of Machine Main body specification
Standard bucket capacity (former JIS)
Body/piping Standard nibbler and breaker
Underbody standard shoe
Boom and arm Standard boom/ 3 surface Reinforcing arm
Date of joint use June, 1999
Hour meter 980 Hours
Others ID key for Operating control/burglarproof
NOTE
Detailed specification
To apply for preengagement
Return to previous page Return to home page
FIG. 7

### APPLICATION FOR PREENGAGEMENT FOR RENTAL ON HEAVY MACHINE EXCAVATOR

Period From Jan. 21, 2000
For monthly rent 1 month For daily rent days
Rental Co. Company: To Person in charge: To Tel:
Object for rent Dynamic Acera Machine No.
Equipment and various attachments
Necessary option and attachment?
Underbody Rubber shoe or rubber crawler
Arm Short arm Long arm
Attachments Slope finishing bucket Nibbler Breaker
Apply for preengagement Reset
Return to previous page Return to home page

## Claims

1. A method for renting a construction machine, comprising the steps of:
causing a network server to hold basic information including specification, rental situation and location of a construction machine for rent;
causing a person seeking a rental service of a construction machine to input specification information including specification of a construction machine of his choice, rental period information including a rental period of his choice, and rental place information including a rental place of his choice when the person gets access to said network;
causing said network server to search with information including the specification, the rental period and the rental place input by the person as search items, for information related to a rentable construction machine on the basis of the basic information including the specification, the rental situation and the location held by the network server; and
providing the person with a searched result by the network server.

2. The method according to claim 1 wherein said network server searches for information related to the rentable construction machines in favor of the rental place information.

3. The method according to claim 2 wherein said network server carries out an equivocal search, after having searched in favor of the rental place information, with respect to the specification information or the rental period information.

4. The method according to claim 1 wherein said rental place information comprises a hierarchical structure comprising an upper location information showing a wider area as an upper class and a lower location information showing a narrower area as a lower class, and the network server searches for information related to the rentable construction machine with the upper location information as an essential search item and the lower location information as an equivocal search item

5. The method according to claim 1 wherein said construction machine for rent is a tracklaying construction machine.

6. The method according to claim 1 wherein said network server searches for information related to the rentable construction machine in favor of the specification information.

7. The method according to claim 1 wherein said specification information comprises a hierarchical structure comprising an upper specification that is not easy to change as an upper class and a lower specification that is easy to change as a lower class, and said network server searches for information related to the rentable construction machine with information related to the upper specification as an essential search item, and with information related to the lower specification as an equivocal search item.

8. The method according to claim 1 wherein said network server searches for information related to the rentable construction machine in favor of the rental period information.

9. The method according to claim 1 wherein said network server searches for information related to the rentable construction machine in favor of one selected out of at least two items out of the specification, the rental period or the rental place of his choice.

10. The method according to claim 1 wherein said network server provides the person with the information related to the rentable construction machine as a list including information related to the location of the construction machine for rent.

11. The method according to claim 1 wherein said network server provides the person with the information related to the rentable construction machine as a calendar including information related to the rental situation of the construction machine for rent.

12. The method according to claim 1 wherein in a case where information related to the rentable construction machine cannot be searched, said network server provides information related to the rentable construction machine owned by a holder of said network server to the person.

13. A method for renting a construction machine from a person who desires to rent the construction machine to a person who desires to receive rental through a network, **characterized in that** a network server is allowed to hold at least information related to specification, a rental situation, a location of a construction machine for rent, and when the person who desires to receive rental gets access to said network, at least information related to specification of a construction machine of his hope, information related to a rental period of his hope and information related to a rental place of his hope are input, and said network server searches, with information related to the specification, the rental period and the rental place input by the person who desires to receive rental as search items, for information related to a rentable construction machine on the basis of information related to the specification, the rental situation and the location held by the network server to provide a searched result to the person who desires to receive rental.

14. A system for renting a construction machine through a network, comprising:
a network server for holding basic information including specification, a rental situation, and a location of a construction machine for rent; and
a network terminal for causing a person seeking a rental service of a construction machine capable of inputting, when the person gets access to the network, basic information related to specification of a construction machine of his choice, a rental period of his choice and a rental place of his choice,
wherein said network server searches, with information related to the specification, the rental period and the rental place input by the person, for information related to a rentable construction machine on the basis of the information related to the specification, the rental situation and the location held by the network server to provide a searched result to the person.

15. A system for renting a construction machine through a network, comprising:
a network server for holding basic information related to specification, a rental situation and a location of a construction machine for rent, said network server searching with information including specification, a rental period and a rental place of a construction machine of which a person seeking a rental service input by a network terminal as search items, for information related to a rentable construction machine on the basis of the basic information related to the specification, the rental situation and the location held by said network server to provide a searched result to the network terminal.

16. A system for renting a construction machine through a network, comprising:
a network terminal for causing a person seeking a rental service of a construction machine capable of inputting information related to specification of a construction machine of his choice, a rental period of his choice and a rental place of his choice, said network terminal allowing a network server to search with information related to the specification, the rental period and the rental place input by the person as search items, for information related to a rentable construction machine on the basis of information related to specification, a rental situation and a location of a construction machine for rent held by the network server, to provide a searched result to the person through said network terminal.
